# EUROPEAN PATENT SPECIFICATION

(11) **EP 0 765 572 B1**
(45) Date of publication and mention of the grant of the patent: **28.06.2000**
(21) Application number: 96904238.1
(22) Date of filing: 18.03.1996
(51) Int. Cl.: H04N 5/00

(54) **MOTION-COMPENSATED FIELD RATE CONVERSION**
BEWEGUNGSKOMPENSIERTE BILDFREQUENZUMWANDLUNG
CONVERSION DE FREQUENCE D'IMAGE COMPENSEE EN MOUVEMENT

(30) Priority: 11.04.1995 EP 95200909
(43) Date of publication of application: 02.04.1997
(73) Proprietor: Koninklijke Philips Electronics N.V., 5621 BA Eindhoven (NL)
(72) Inventor: DE HAAN, Gerard, NL-5621 BA Eindhoven (NL); BIEZEN, Paul, Willem, Albert, Cornelis, NL-5621 BA Eindhoven (NL)
(74) Representative: Steenbeek, Leonardus Johannes
(86) International application number: IB9600230
(87) International publication number: WO9633571

(56) References cited:
- EP-A- 0 475 499
- EP-A- 0 648 047
- EP-A- 0 650 293
- WO-A-93/00773
- US-A- 5 057 921

## Description

The invention relates to a motion-compensated field rate conversion, in which interpolated fields are obtained from input fields in dependence upon motion vectors.

WO-A-93/00773 discloses a method for converting the timing of a sequence of motion images in order to transform frame frequency F into frame frequency f. The pixels of the odd-numbered images are defined at least by their luminance value while at least the pixels of the even-numbered images are defined at least by their luminance value and a motion vector. In the case of a 50 Hz to 60 Hz conversion, symmetrically estimated motion vector -V1 and V1 are estimated between input fields T1, T2 and T3. Output field t2 is obtained by interpolation between input fields T1 and T2 using respective motion vectors -5/6 V1 and 1/6 V1. Output field t3 is obtained by interpolation between input fields T2 and T3 using respective motion vectors -4/6 V1 and 2/6 V1.

EP-A-0,475,499 discloses a system for field rate conversion in which the interpolated pictures result as shifted input fields. It is mentioned that, depending on the reliability of the motion vectors, the compensation can be more or less complete. In other words: if motion vectors are unreliable their effect is reduced by multiplying them with a factor smaller than one. In the described case of a field rate doubler, the result is some 50 Hz motion judder which is not very objectionable and can be interpreted as a velocity depending blurring.

In field rate convertors with a higher or a non-integer ratio between the input and the output field rate, the effect of reduced motion compensation is the breakthrough of a much lower frequency in the motion judder. This frequency equals the largest common factor of the output and the input field rate. For example, an up-conversion from 24 Hz film material to 60 Hz video material, introduces a 12 Hz component in the motion judder. Apart from this long repetition period of the judder, the motion portrayal often is very irregular.

It is, *inter alia,* an object of the invention to provide a motion-compensated interpolation in which this disturbance is reduced. To this end, a first aspect of the invention provides a method as defined in claim 1. A second aspect of the invention provides an apparatus as defined in claim 4. A third aspect of the invention provides a television signal receiver as defined in claim 5. Advantageous embodiments are defined in the dependent claims.

In a method of processing input fields of a picture signal to obtain interpolated fields located temporally between the input fields, motion vectors are provided between successive input fields, whereafter a quality of the motion vectors is assessed. In accordance with the present invention, the motion vectors are adapted in dependence upon the assessed quality, whereby both decreased and increased motion vector lengths occur in respective interpolated fields. The interpolated fields are obtained from the input fields in dependence upon the thus adapted motion vectors.

Thus, if the estimated motion vectors are not believed to be sufficiently reliable for use in a straightforward motion-compensated interpolation, there is provided a (partial) fall-back at a regular motion judder, preferably of the highest possible frequency, i.e. half the output field frequency. This judder, as any other, decreases the visibility of artifacts in the picture due to unreliable motion vectors, but as such is much less annoying than the irregular and more low-frequent judder resulting from a straightforward down-scaling of the motion vectors as in the prior art. The present invention is applicable to field rate conversions between any input and output rate, and has the somewhat surprising property that the applied vector shifts are enlarged for some of the output fields.

When input video fields are motion compensated to realize video data at a certain output field frequency, the common procedure is to take information from the temporally nearest input fields (or from the two fields on either side of the required temporal instance) and to shift this data such that objects are positioned at the motion trajectory, i.e. the imaginary line through the time-position graph of the object. Depending on the temporal distance between the available field and the required field, the length of the motion vectors as calculated between successive input fields has to be divided by a factor. In the proposed global fall-back algorithm, this factor is adapted such that the position of moving objects is field alternatingly above or below the motion trajectory. Consequently, motion vectors are in some fields reduced, but in other fields enlarged. Preferably, this adaptation of the motion vector lengths is not simply field alternating, but depends on the ratio between input and output field rate and on the choice of the input field(s) that is used after shifting over the estimated motion vector to provide the output field.

These and other aspects of the invention will be apparent from and elucidated with reference to the embodiments described hereinafter.

In the drawings:
Fig. 1 illustrates a global fall-back according to the invention in the case of a 25 Hz film to 100 Hz video conversion;
Fig. 2 illustrates the global fall-back mode according to the present invention for the case of a 24 Hz (film) to 60 Hz (video) conversion;
Fig. 3 illustrates an implementation of the global fall-back measure for a 60 Hz to 50 Hz field rate conversion;
Fig. 4 illustrates a first embodiment of a motion-compensated interpolation circuit in accordance with the present invention;
Fig. 5 illustrates a second embodiment of a motion-compensated interpolation circuit in accordance with the present invention; and
Fig. 6 shows an embodiment of a television receiver in accordance with the present invention.

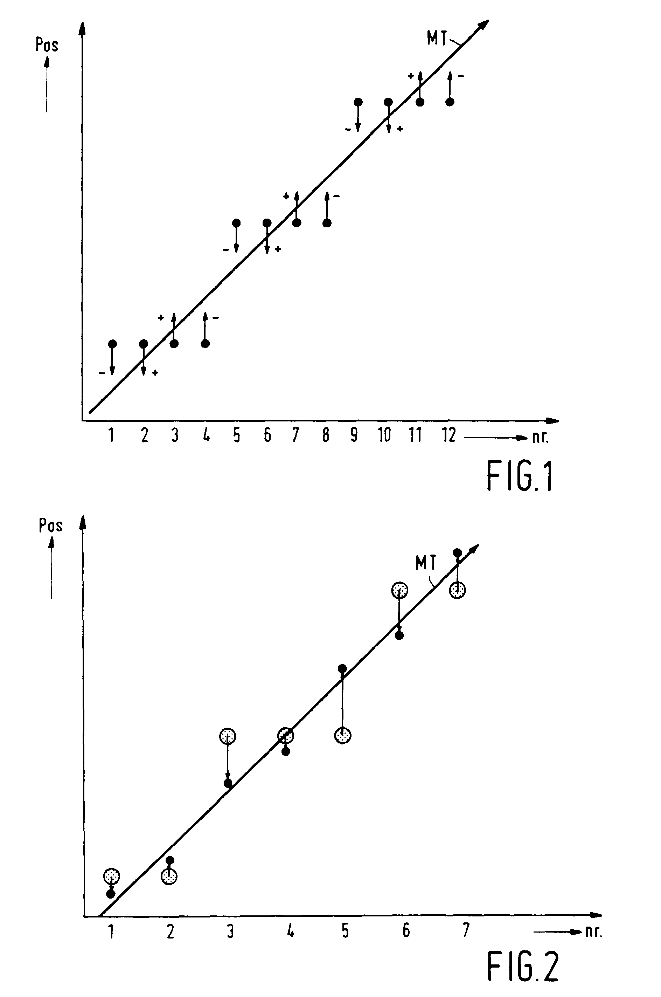

Fig. 1 an example is provided for the case of 25 Hz film to 100 Hz video up-conversion applying shifts to one nearby input field only. The horizontal axis indicates the field number, while the vertical axis indicates the position. Assuming a straight non-accelerated movement, an object would move along the motion trajectory MT, which is to be understood as a straight line drawn such that the deviation of the actual positions of the object in successive fields from this straight line is minimal on average; of course, this line may be shifted in time which shift corresponds to an overall processing delay. The small black circles indicate the position of an object in the 25 Hz input fields. The arrows indicate the motion vectors which are supposed to shift the object to the motion trajectory. However, when the motion vectors are not believed to be sufficiently reliable to be used without any further measures, the fall-back according to the present invention becomes active. As shown in Fig. 1, in the fall-back case, the motion vectors are twice enlarged (+), than twice shrunk (-), etc, so as to obtain positions of the moving object which are field-alternatingly above or below the motion trajectory MT. As indicated by the thus adapted arrows in the figure, exactly 50 movement phases per second result, i.e. the objects position in two successive fields is identical. This is just a choice, smaller and also larger deviations from the exact 25 to 100 Hz compensation are also possible. The choice may depend on the reliability of the motion vectors: the worse the (global) reliability, the larger the deviation from the ideal compensation in which all arrows would end on the motion trajectory MT.

Fig. 2 shows a second example, where the current invention is elaborated for the case of 24 Hz film to 60 Hz video conversion. The large circles indicate the positions before compensation, while the small circles indicate the positions obtained after a partial motion-compensated interpolation according to the present invention. The large circles are formed by a standard 2-3 pull down conversion to obtain 60 output fields from 24 input fields. Again, in case of unreliable motion vectors, the motion vectors are adapted such that the positions of the moving object are field-alternatingly at one side or the other of the motion trajectory MT.

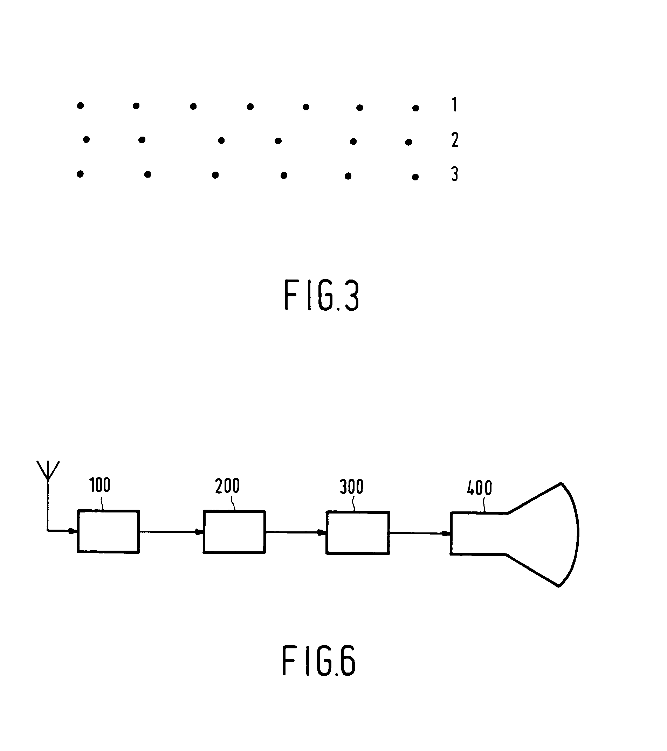

Fig. 3 shows how the same idea works out for a 60 Hz to 50 Hz video field rate conversion. The figure shows the original position of the (input) material in the first row (1), the fully compensated 60 Hz output in the last row (3), and between them, in row 2, the "partially corrected" interpolation result according to the present invention. Row 3 is obtained with a straightforward motion-compensated interpolation which can be used when the estimated motion vectors are sufficiently reliable. Row 2 shows positions which are alternatingly at the right-hand side and at the left-hand side of the corresponding positions in row 3. A position at the right-hand side of the corresponding position in row 3 is obtained by an enlarged motion vector, while a position at the left-hand side of the corresponding position in row 3 is obtained by a decreased motion vector.

In one particular embodiment, adapted scaling of the motion vectors was made depending on the measured contrasts in the velocity plane. If the x-component of two horizontally neighboring displacement vectors or the y-component of two vertically neighboring displacement vectors differed more than a first threshold value, a slight deviation from the scaling as required for a perfect motion compensation was introduced. If the difference was more than a second threshold the scaling was further adapted and so on. Obviously, any number of thresholds can be used in the implementation. The background of this particular adaptation is that the global reliability of motion vectors in a scene is expected to decrease if there are objects moving fast in different directions close to each other (input material grows more difficult with increasing velocities and particularly if the velocity field contains large contrasts). How rapidly the global vector reliability decreases depends on the applied estimation algorithm which therefore will determine the optimal thresholds to be used.

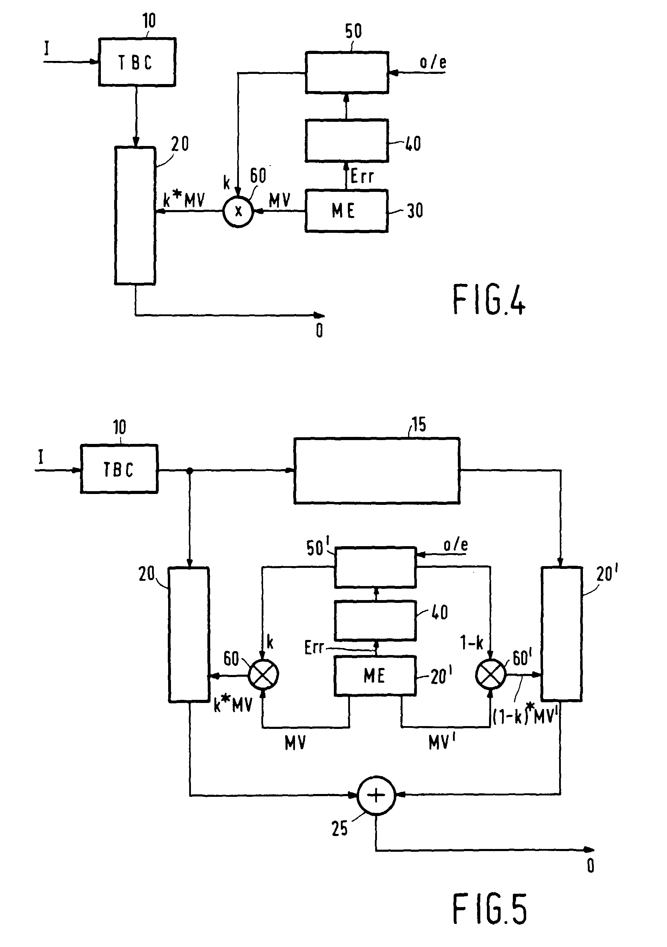

Fig. 4 illustrates a first embodiment of a motion-compensated interpolation circuit in accordance with the present invention, in which an interpolated output field O is obtained by shifting a single input field I along the motion trajectory. The input signal is applied to a motion vector controllable variable delay circuit 20 thru a time base corrector (TBC) 10. A motion estimator (ME) 30 furnishes motion vectors MV. A fall-back detection circuit 40 is coupled to the motion estimator 30 to receive an error signal Err indicative of the consistency in the motion vector field, the estimation match errors, or some other information useful for determining the reliability of the estimated motion vectors. The fall-back detection circuit 40 determines whether the error signal Err deviates seriously enough from acceptable values and, if so, signals to a vector modifier 50 that the motion vectors MV produced by the motion estimator 30 should be adapted such that the visibility of motion estimation errors is reduced. The vector modifier 50 produces a vector length modifying factor k which is applied to a vector multiplier 60 for multiplying the horizontal and vertical components of the motion vectors MV from the motion estimator 30 by this factor k. It goes without saying that if no adaptation is necessary, the vector length modifying factor k solely depends on the temporal position of the interpolated field with regard to the corresponding input field. The thus modified motion vectors k*MV are applied to the variable delay 20 for controlling the motion vector dependent shift. The variable delay 20 produces the output fields O.

As mentioned above, if the motion vectors are to be adapted to reduce the visibility of motion vector estimation errors, they should be output-field-alternatingly adapted such that the positions of moving objects are at alternating sides of the motion trajectory. To this end, the vector modifier 50 receives an odd/even field identifier signal o/e. A field may be interlaced or non-interlaced.

Fig. 5 illustrates a second embodiment of a motion-compensated interpolation circuit in accordance with the present invention, in which an interpolated output field O is obtained by shifting two input fields I along the motion trajectory, and averaging the thus shifted input fields. The embodiment of Fig. 5 is much alike that of Fig. 4, so that a description of only the differences between these embodiments will suffice. The output signal of the time base corrector 10 is also applied to a second variable delay 20' through a field delay 15. The motion estimator 30 of Fig. 4 is replaced by a motion estimator 30' which produces, in addition to the above-mentioned motion vectors MV, motion vectors MV' for use with the other input field. The vector modifier 50 of Fig. 4 is replaced by a vector modifier 50' which produces, in addition to the above-mentioned factor k, a vector length modifying factor 1-k for use with the other input field. When two input fields are used in a motion-compensated interpolation, it will be clear that if the motion vectors MV to be used with one of these input fields are shortened (or made longer) by a factor k, the motion vectors MV' to be used with the other field are to be made longer (or shortened) by a corresponding factor 1-k. A vector multiplier 60' multiplies the horizontal and vertical components of the motion vectors MV' from the motion estimator 30' by this factor 1-k. The thus modified motion vectors (1-k)*MV' are applied to the variable delay 20' for controlling its motion vector dependent shift. An averager 25 receives respective motion-compensated shifted fields from the variable delays 20 and 20' for producing the output field O.

Fig. 6 shows an embodiment of a television receiver in accordance with the present invention. A tuner and IF circuit 100 receives antenna signals and furnishes demodulated video signals to a video processor 200. The video processor does all usual things like brightness and contrast control, and furnishes processed video signals as an input picture signal I to an upconverter 300 which may be either of the embodiments of Figs. 4, or 5, to obtain interpolated output fields O. The upconverter 300 furnishes these interpolated output fields O to a display 400.

A main aspect of the invention can be summarized as follows. In pictures resulting from motion-compensated field rate convertors, artifacts resulting from motion vector estimation errors can occur in scenes with complicated or very fast motion. If these artifacts degrade the picture quality more than what is gained with motion compensation, it is good to gradually switch over to non-motion compensated interpolation. This disclosure describes an approach that yields considerably better results than a straightforward reduction of the motion vector length which is known from the prior art. In contrast with previous proposals, vector lengths are sometimes increased, so that both increased and decreased motion vector lengths occur in respective interpolated fields. Hereby, a motion judder is obtained which reduces the visibility of the motion vector estimation errors.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The invention can be implemented by means of hardware comprising several distinct elements, and by means of a suitably programmed computer. Clearly, sophistications in which the adaptation of the deviation is only allowed to change slowly in time are possible. These sophistications can be useful to prevent visible switching of the introduced global blur or motion error. In this disclosure and in the claims, a field may be interlaced or non-interlaced.

## Claims

1. A method of processing input fields (I) of a picture signal to obtain interpolated fields (O) located temporally between said input fields (I), the method comprising the steps of:
providing (30) motion vectors (MV) between input fields (I);
determining (40) a reliability (Err) of said motion vectors (MV);
producing (50) a vector length modifying factor (k) in dependence upon said reliability (Err) and a temporal position of an interpolated field (O) with regard to corresponding input fields (I);
multiplying (60) said motion vectors (MV) by said vector length modifying factor (k) to obtain adapted motion vectors (k*MV); and
obtaining (20) said interpolated fields (O) from said input fields (I) in dependence upon said adapted motion vectors (k*MV);
characterized in that said vector length modifying factor (k) is produced (50) in such a manner, that in respective interpolated fields (O) both decreased and increased motion vector lengths occur with regard to motion vectors lengths that solely depend on said temporal position of said interpolated field (O) with regard to said corresponding input fields (I).

2. A method as claimed in claim 1, wherein said step (40) of determining said reliability (Err) of said motion vectors (MV) includes the step of measuring contrasts in a velocity plane formed by said motion vectors (MV).

3. A method as claimed in claim 2, wherein the step of measuring contrasts in a velocity plane formed by said motion vectors (MV) includes the step of comparing differences between horizontal and/or vertical components of motion vectors (MV) corresponding to neighboring image parts, to at least one threshold value, whereby the motion vectors (MV) are adapted in dependence upon whether said at least one threshold value is exceeded.

4. An apparatus for processing input fields (I) of a picture signal to obtain interpolated fields (O) located temporally between said input fields (I), the apparatus comprising:
means (30) for providing motion vectors (MV) between input fields (I);
means (40) for determing a reliability (Err) of said motion vectors (MV);
means (50) for producing a vector length modifying factor (k) in dependence upon said reliability (Err) and a temporal position of an interpolated field (O) with regard to corresponding input fields (I);
means (60) for multiplying said motion vectors (MV) by said vector length modifying factor (k) to obtain adapted motion vectors (k*MV); and
means (20) for obtaining said interpolated fields (O) from said input fields (I) in dependence upon said adapted motion vectors (k*MV);
characterized in that said means (50) for producing a vector length modifying factor comprises means for generating said vector length modifying factor (k) in such a manner, that in respective interpolated fields (O) both decreased and increased motion vector lengths occur with regard to motion vectors lengths that solely depend on said temporal position of said interpolated field (O) with regard to said corresponding input fields (I).

5. A television signal receiver, comprising:
means (100, 200) coupled to receive a television signal for furnishing a picture signal;
an apparatus (300) as defined in claim 4, for processing input fields (I) of said picture signal, to obtain interpolated fields (O); and
display means (400) coupled to said processing apparatus (300).

## Patentansprüche

1. Verfahren zum Verarbeiten von Eingangsteilbildern (I) eines Bildsignals zum Erhalten interpolierter Teilbilder (O), die in der Zeit zwischen den genannten Eingangsteilbildern (I) liegen, wobei dieses Verfahren die nachfolgenden Verfahrensschritte umfasst:
- das Schaffen (30) von Bewegungsvektoren (MV) zwischen Eingangsteilbildern (I);
- das Bestimmen (40) einer Zuverlässigkeit (Err) der genannten Bewegungsvektoren (MV);
- das Erzeugen (50) eines die Vektorlänge modifizierenden Faktors (k) in Abhängigkeit von der genannten Zuverlässigkeit (Err) und einer Zeitposition eines interpolierten Teilbildes (O) in Bezug auf die entsprechenden Eingangsteilbilder (I);
- das Multiplizieren (60) der genannten Bewegungsvektoren (MV) mit dem genannten die Vektorlänge modifizierenden Faktor (k) zum Erhalten angepasster Bewegungsvektoren (k∗MV); und
- das Erhalten (20) der genannten interpolierten Teilbilder (O) aus den genannten Eingangsteilbildern (I) in Abhängigkeit von den genannten angepassten Bewegungsvektoren (k∗MV);
dadurch gekennzeichnet, dass der genannte die Vektorlänge modifizierende Faktor (k) derart erzeugt (50) wird, dass in den betreffenden interpolierten Teilbildern (O) gegenüber Bewegungsvektorlängen, die nur abhängig sind von der genannten Zeitposition des genannten interpolierten Teilbildes (O) gegenüber den genannten entsprechenden Eingangsteilbildern (I) verkleinerte sowie vergrößerte Bewegungsvektorlängen auftreten.

2. Verfahren nach Anspruch 1, wobei der genannte Verfahrensschritt (40) der Bestimmung der genannten Zuverlässigkeit (Err) der genannten Bewegungsvektoren (MV) den Schritt der Messung von Kontrasten in einer durch die genannten Bewegungsvektoren (MV) gebildeten Geschwindigkeitsebene.

3. Verfahren nach Anspruch 2, wobei der Verfahrensschritt der Messung von Kontrasten in einer durch die genannten Bewegungsvektoren (MV) gebildeten Geschwindigkeitsebene den Schritt des Vergleichs von Differenzen zwischen horizontalen und/oder vertikalen Anteilen von Bewegungsvektoren (MV) entsprechend benachbarten Bildteilen umfasst, mit wenigstens einem Schwellenwert, wobei die Bewegungsvektoren (MV) in Abhängigkeit davon, ob der genannte wenigstens eine Schwellenwert überschritten wird, angepasst werden.

4. Anordnung zum Verarbeiten von Eingangsteilbildern (I) eines Bildsignals zum Erhalten interpolierter Teilbilder (O), die in der Zeit zwischen den genannten Eingangsteilbildern (I) liegen, wobei diese Anordnung die nachfolgenden Elemente aufweist:
- Mittel (30) zum Schaffen von Bewegungsvektoren (MV) zwischen Eingangsteilbildem (I);
- Mittel (40) zum Bestimmen einer Zuverlässigkeit (Err) der genannten Bewegungsvektoren (MV);
- Mittel (50) zum Erzeugen eines die Vektorlänge modifizierenden Faktors (k) in Abhängigkeit von der genannten Zuverlässigkeit (Err) und der Zeitlage eines interpolierten Teilbildes (O) in bezug auf die entsprechenden Eingangsteilbilder (I);
- Mittel (60) zum Multiplizieren der genannten Bewegungsvektoren (MV) mit dem genannten die Vektorlänge modifizierenden Faktor (k) zum Erhalten angepasste Bewegungsvektoren (k∗MV); und
- Mittel (20) zum Erhalten der genannten interpolierten Teilbilder (O) aus den genannten Eingangsteilbildern (I) in Abhängigkeit von den genannten angepassten Bewegungsvektoren (k∗MV);
dadurch gekennzeichnet, dass die genannten Mittel (50) zum Erzeugen eines die Vektorlänge modifizierenden Faktors Mittel aufweisen zum Erzeugen des genannten die Vektorlänge modifizierenden Faktors (k) derart, dass in den betreffenden interpolierten Teilbildern (O) gegenüber Bewegungsvektorlängen, die nur abhängig sind von der genannten Zeitlage des genannten interpolierten teilbildes (O) gegenüber den genannten entsprechenden Eingangsteilbildern (I) gekürzte und verlängerte Bewegungsvektorlängen auftreten.

5. Fernsehsignalempfänger mit:
- Mitteln (100, 200), die ein Fernsehsignal empfangen zum Liefern eines Bildsignals;
- einer Anordnung (300) wie in Anspruch 4 definiert zum verarbeiten von Eingangsteilbildern (I) des genannten Bildsignals zum Erhalten interpolierter Teilbilder (O); und
- Wiedergabemittel (400), die mit der genannten Verarbeitungsanordnung (300) gekoppelt sind.

## Revendications

1. Procédé de traitement de trames d'entrée (I) d'un signal d'image afin d'obtenir des trames interpolées (O) situées dans le temps entre lesdites trames d'entrée (I), le procédé comprenant les étapes de :
fournir (30) des vecteurs de mouvement (MV) entre des trames d'entrée (I);
déterminer (40) une fiabilité (Err) desdits vecteurs de mouvement (MV);
produire (50) un facteur (k) de modification de longueur de vecteur en fonction de ladite fiabilité (Err) et d'une position dans le temps d'une trame interpolée (O) en ce qui concerne des trames d'entrée (I) correspondantes;
multiplier (60) lesdits vecteurs de mouvement (MV) par ledit facteur (k) de modification de longueur de vecteur afin d'obtenir des vecteurs de mouvement adaptés (k*MV); et
obtenir (20) lesdites trames interpolées (O) desdites trames d'entrée (I) en fonction desdits vecteurs de mouvement adaptés (k*MV);
caractérisé en ce que ledit facteur (k) de modification de longueur de vecteur est produit (50) de telle sorte que, dans des trames interpolées (O) respectives, tant des longueurs augmentées que diminuées de vecteurs de mouvement se produisent par rapport aux longueurs de vecteurs de mouvement qui dépendent uniquement de ladite position dans le temps de ladite trame interpolée (O) par rapport auxdites trames d'entrée (I) correspondantes.

2. Procédé suivant la revendication 1, dans lequel ladite étape (40) de détermination de ladite fiabilité (Err) desdits vecteurs de mouvement (MV) inclut l'étape de mesure des contrastes dans un plan de vitesse formé par lesdits vecteurs de mouvement (MV).

3. Procédé suivant la revendication 2, dans lequel l'étape de mesure des contrastes dans un plan de vitesse formé par lesdits vecteurs de mouvement (MV) inclut l'étape de comparaison des différences entre des composantes horizontale et/ou verticale de vecteurs de mouvement (MV) correspondant à des parties de trames avoisinantes, à au moins une valeur seuil, les vecteurs de mouvement (MV) étant adaptés en fonction du fait que ladite au moins une valeur seuil est dépassée ou non.

4. Appareil pour traiter les trames d'entrée (I) d'un signal d'image afin d'obtenir des trames interpolées (O) situées dans le temps entre lesdites trames d'entrée (I), l'appareil comprenant :
des moyens (30) pour fournir des vecteurs de mouvement (MV) entre des trames d'entrée (I);
des moyens (40) pour déterminer une fiabilité (Err) desdits vecteurs de mouvement (MV);
des moyens (50) pour produire un facteur (k) de modification de longueur de vecteur en fonction de ladite fiabilité (Err) et d'une position dans le temps d'une trame interpolée (O) en ce qui concerne des trames d'entrée (I) correspondantes;
des moyens (60) pour multiplier lesdits vecteurs de mouvement (MV) par ledit facteur (k) de modification de longueur de vecteur afin d'obtenir des vecteurs de mouvement adaptés (k*MV); et
des moyens (20) pour obtenir lesdites trames interpolées (O) desdites trames d'entrée (I) en fonction desdits vecteurs de mouvement adaptés (k*MV);
caractérisé en ce que lesdits moyens (50) pour produire un facteur de modification de longueur de vecteur comprend des moyens pour générer ledit facteur de modification de longueur de vecteur (k) de telle sorte que, dans des trames interpolées (O) respectives, tant des longueurs augmentées que diminuées de vecteurs de mouvement se produisent par rapport aux longueurs de vecteurs de mouvement qui dépendent uniquement de ladite position dans le temps de ladite trame interpolée (O) par rapport auxdites trames d'entrée (I) correspondantes.

5. Récepteur de signaux de télévision comprenant :
des moyens (100, 200) couplés pour recevoir un signal de télévision pour fournir un signal d'image;
un appareil (300) tel que défini dans la revendication 4 pour traiter les trames d'entrée (I) dudit signal d'image, afin d'obtenir des trames interpolées (O); et
des moyens d'affichage (400) couplés audit appareil de traitement (300).
